(19) Europäisches Patentamt
European Patent Office
Office européen des brevets

(11) EP 1 268 645 B1

(12) EUROPÄISCHE PATENTSCHRIFT

(45) Veröffentlichungstag und Bekanntmachung des Hinweises auf die Patenterteilung:
**26.05.2004 Patentblatt 2004/22**

(21) Anmeldenummer: **01900422.5**

(22) Anmeldetag: **11.01.2001**

(51) Int Cl.[7]: **C08K 5/3475**, C08K 5/3492, C08J 5/18, C08L 67/02

(86) Internationale Anmeldenummer:
**PCT/EP2001/000275**

(87) Internationale Veröffentlichungsnummer:
**WO 2001/053405 (26.07.2001 Gazette 2001/30)**

(54) **WEISSE, UV-STABILISIERTE, THERMOFORMBARE FOLIE AUS EINEM KRISTALLISIERBAREN THERMOPLAST, VERFAHREN ZU IHRER HERSTELLUNG UND IHRE VERWENDUNG**

WHITE, UV-STABILIZED THERMOFORMABLE FILM FROM A CRYSTALLIZABLE THERMOPLAST, METHOD FOR PRODUCING THE SAME AND ITS USE

FEUILLE BLANCHE THERMOFORMABLE STABILISEE ANTI-UV OBTENUE A PARTIR D'UN THERMOPLASTIQUE CRISTALLISABLE ET PROCEDE DE FABRICATION ET D'UTILISATION DE LADITE FEUILLE

(84) Benannte Vertragsstaaten:
**DE FR GB IT LU NL**

(30) Priorität: **20.01.2000 DE 10002164**

(43) Veröffentlichungstag der Anmeldung:
**02.01.2003 Patentblatt 2003/01**

(73) Patentinhaber: **Mitsubishi Polyester Film GmbH**
**65203 Wiesbaden (DE)**

(72) Erfinder:
- **MURSCHALL, Ursula**
  **55283 Nierstein (DE)**
- **OBERLÄNDER, Klaus**
  **65207 Wiesbaden (DE)**
- **CRASS, Günther**
  **65232 Taunusstein (DE)**
- **KERN, Ulrich**
  **55218 Ingelheim (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:
**EP-A- 0 292 120**
**EP-A- 0 620 245**
**EP-A- 0 942 031**
**EP-A- 1 052 269**

EP 1 268 645 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine weiße, UV-stabilisierte, thermoformbare Folie aus einem kristallisierbaren Thermoplast, deren Dicke im Bereich von 10 bis 500 μm liegt. Die Folie enthält mindestens ein Pigment und einen UV-Stabilisator als Lichtschutzmittel und zeichnet sich durch eine gute Verstreckbarkeit, durch sehr gute optische und mechanische Eigenschaften und durch eine gute Thermoformbarkeit aus. Die Erfindung betrifft ferner ein Verfahren zur Herstellung dieser Folie und ihre Verwendung.

Weiße Folien mit einer Dicke zwischen 10 und 500 μm sind hinreichend bekannt.

Diese Folien enthalten keinerlei UV-Stabilisatoren als Lichtschutzmittel, so dass sich weder die Folien noch die daraus hergestellten Artikel für Außenanwendungen eignen. Bei Außenanwendungen zeigen diese Folien bereits nach kurzer Zeit eine Vergilbung und eine Verschlechterung der mechanischen Eigenschaften infolge eines photooxidativen Abbaus durch Sonnenlicht.

Des Weiteren sind diese orientierten Folien nicht thermoformbar oder tiefziehbar.

In der EP A-0 620 245 sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen.

Aufgabe der vorliegenden Erfindung war es, eine weiße Folie mit einer Dicke von 10 bis 500 μm bereitzustellen, die neben einer guten Verstreckbarkeit, guten mechanischen sowie optischen Eigenschaften, einer niedrigen Gelbwert vor allem eine hohe UV-Stabilität aufweist und einen hohen Lichtschutz sowie eine gute Thermoformbarkeit bietet.

Eine hohe UV-Stabilität bedeutet, dass die Folien durch Sonnenlicht oder andere UV-Strahlung nicht oder nur extrem wenig geschädigt werden, so dass sich die Folien für Außenanwendungen und/oder kritische Innenanwendungen eignen. Insbesondere sollen die Folien bei mehrjähriger Außenanwendung nicht vergilben, keine Versprödung oder Rissbildung der Oberfläche zeigen und auch keine Verschlechterung der mechanischen Eigenschaften aufweisen.

Zu den guten optischen Eigenschaften zählen beispielsweise eine homogene, streifenfreie Einfärbung, eine niedrige Lichttransmission (< 70 %), ein akzeptabler Oberflächenglanz (> 15), sowie eine im Vergleich zur unstabilisierten Folie nahezu unveränderte Gelbwert.

Zu den guten mechanischen Eigenschaften zählt unter anderem eine hoher E-Modul ($E_{MD}$> 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch in Querrichtung hervorragend und ohne Abrisse orientieren läßt.

Hinreichende Thermoformbarkeit bedeutet, dass sich die Folie auf handelsüblichen Tiefziehmaschinen ohne unwirtschaftliches Vortrocknen zu komplexen und großflächigen Formkörpern tiefziehen bzw. thermoformen lässt.

Darüber hinaus sollte die erfindungsgemäße Folie rezyklierbar sein, insbesondere ohne Verlust der optischen und der mechanischen Eigenschaften, sowie gegebenenfalls schwer brennbar, damit sie beispielsweise auch für Innenanwendungen und im Messebau eingesetzt werden kann.

Gelöst wird diese Aufgabe durch eine weiße Folie mit einer Dicke im Bereich von 10 bis 500 μm, die als Hauptbestandteil einen kristallisierbaren Thermoplasten enthält, die dadurch gekennzeichnet ist, dass die Folie mindestens ein Weißpigment und mindestens einen UV-Stabilisator als Lichtschutzmittel enthält, wobei der UV-Stabilisator und/oder das Weißpigment als Masterbatch bei der Folienherstellung direkt dosiert werden und dass die Folie thermoformbar ist.

Die weiße Folie enthält als Hauptbestandteil einen kristallisierbaren Thermoplasten. Geeignete kristallisierbare bzw. teilkristalline Thermoplaste sind beispielsweise Polyethylenterephthalat, Polybutylenterephthalat, Polyethylennaphthalat, wobei Polyethylenterephthalat bevorzugt ist.

Erfindungsgemäß versteht man unter kristallisierbaren Thermoplasten kristallisierbare Homopolymere, kristallisierbare Copolymere, kristallisierbare Compounds (Mischungen), kristallisierbares Rezyklat und andere Variationen von kristallisierbaren Thermoplasten.

Die weiße Folie kann sowohl einschichtig als auch mehrschichtig sein. Die weiße Folie kann ebenfalls mit diversen Copolyestern oder Haftvermittlern beschichtet sein.

Die weiße thermoformbare Folie enthält mindestens einen UV-Stabilisator als Lichtschutzmittel, der über die sogenannte Masterbatch-Technologie direkt bei der Folienherstellung dosiert wird, wobei die Konzentration des UV-Stabilisators zwischen 0,01 bis 8 Gew.-%, vorzugsweise zwischen 0,05 Gew.-% und 5 Gew.-%, bezogen auf das Gewicht der Schicht des kristallisierbaren Thermoplasten, liegt.

Die weiße thermoformbare Folie enthält mindestens ein Pigment zur Weißfärbung, wobei die Konzentration des Pigmentes zwischen 0,3 Gew.-% und 25 Gew.-%, vorzugsweise zwischen 1,0 und 20 Gew.-%, bezogen auf das Gewicht der Schicht des kristallisierbaren Thermoplasten, liegt. Vorzugsweise wird das Weißpigment über die sogenannte Masterbatch-Technologie direkt bei der Folienherstellung dosiert, kann aber auch direkt beim Rohstoffhersteller eingearbeitet werden.

Geeignete Weißpigmente sind vorzugsweise Titandioxid, Bariumsulfat, Calciumcarbonat, Kaolin, Siliciumdioxid, wobei Titandioxid und Bariumsulfat bevorzugt sind.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z. B: nach dem Chlorid-oder dem Sulfat-Prozess, hergestellt werden. Ihre Menge in der Basisschicht beträgt 0,3 - 25 Gew.-%, bezogen auf die Basisschicht, die mittlere Teilchengröße ist relativ klein und liegt vorzugsweise im Bereich von 0,10 bis 0,30 µm.

Durch Titandioxid der beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als Überzug für $TiO_2$-Weißpigmen in Papieren oder Anstrichmitteln zur Verbesserung der Lichtechtheit eingesetzt wird.

$TiO_2$ ist bekanntlich fotoaktiv. Bei Einwirkung von UV-Strahlen bilden sich freie Radikale auf der Oberfläche der Partikel. Diese freien Radikale können zu den filmbildenden Polymeren wandern, was zu Abbaureaktionen und Vergilbung führt. Um dies zu verhindern, werden die Partikel mit oxidischen Materialien beschichtet. Zu den besonders geeigneten Oxiden gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH; -OR; -COOX; (X = R, H oder Na; R = Alkyl mit 1 - 34 C-Atomen). Bevorzugte organische Verbindungen sind Alkanole und Fettsäuren mit 8 - 30 C-Atomen in der Alkylgruppe, insbesondere Fettsäuren und primäre n-Alkanole mit 12 - 24 C-Atomen, sowie Polydiorganosiloxane und/oder Polyorganhydrogensiloxane wie z. B. Polydimethylsiloxan und Polymethylhydrogensiloxan.

Der Überzug der Titandioxidteilchen besteht gewöhnlich aus 1 bis 12, insbesondere 2 bis 6 g anorganischer Oxide und 0,5 bis 3, insbesondere 0,7 bis 1,5 g organischer Verbindung, bezogen auf 100 g Titandioxidteilchen. Der Überzug wird auf die Teilchen in wässriger Suspension aufgebracht. Die anorganischen Oxide werden aus wasserlöslichen Verbindungen, z B. Alkali-, insbesondere Natrium nitrat, Natriumsilikat (Wasserglas) oder Kieselsäure in der wässrigen Suspension ausgefällt.

Unter anorganischen Oxiden wie $Al_2O_3$ oder $SiO_2$ sind auch die Hydroxide oder deren verschiedene Entwässerungsstufen wie z. B. Oxidhydrat zu verstehen, ohne dass man deren genaue Zusammensetzung und Struktur kennt. Auf das $TiO_2$-Pigmen werden nach dem Glühen und Mahlen in wässriger Suspension die Oxidhydrate z. B. des Aluminiums und/oder Siliciums gefällt die Pigmente dann gewaschen und getrocknet. Diese Ausfällung kann somit direkt in einer Suspension geschehen, wie sie im Herstellungsprozess nach der Glühung und der sich anschließenden Nassmahlung anfällt. Die Ausfällung der Oxide und/oder Oxidhydrate der jeweiligen Metalle erfolgt aus den wasserlöslichen Metallsalzen im bekannten pH-Bereich, für das Alum inium wird beispielsweise Aluminiumsulfat in wässriger Lösung (pH kleiner 4) eingesetzt und durch Zugabe von wässriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatiösung aus, sollte der pH-Wert der vorgelegten $TiO_2$-Suspension im stark alkalischen Bereich (pH größer 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 Stunden gerührt, wobei die ausgefällten Schichten eine Alterung erfahren. Das beschichtete Produkt wird von der wässrigen Dispersion abgetrennt und nach dem Waschen bei erhöhter Temperatur, insbesondere bei 70 bis 100 °C, getrocknet.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflusst werden.

Die Inhibierung dieser photooxidativen Abbauvorgänge ist von erheblichertechnischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vemetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in α-Stellung der Estergruppen zu Hydroperoxiden und deren Zersetzungsprodukten sowie zu damit verbundenen Kettenspaltungen

führen (H. Day, D. M. Wiles: J. Appl. Polym. Sci 16,1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

In einer ganz besonders bevorzugten Ausführungsform enthält die erfindungsgemäße Folie 0,01 Gew.-% bis 5,0 Gew.-% 2-(4,6-Diphenyl-1,3,5-triazin-2-yl)-5-(hexyl)oxyphenol der Formel

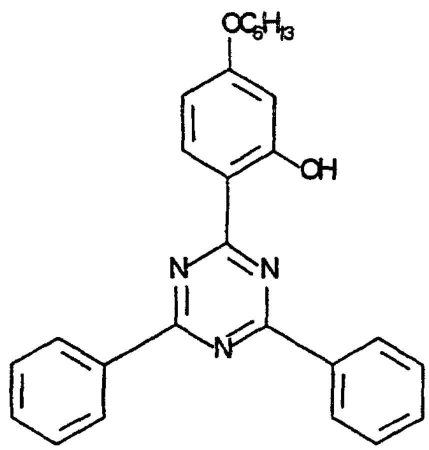

oder 0,01 Gew.-% bis 5,0 Gew.-% 2,2-Methylen-bis(6-(2H-benzotriazol-2 yl)-4-(1,1,2,2-tetramethylpropyl)-phenol der Formel

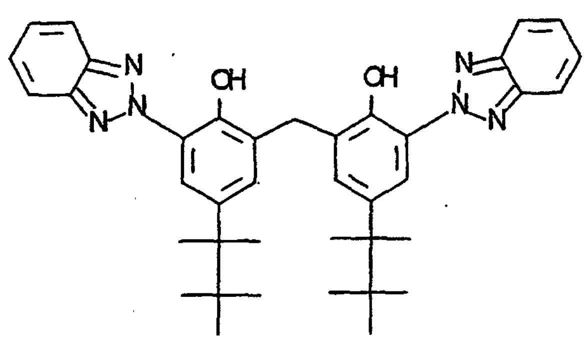

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Der oder die UV-Stabilisatoren sind vorzugsweise in der/den Deckschichten enthalten. Bei Bedarf kann auch die Kemschicht mit UV-Stabilisator ausgerüstet sein.

Es war völlig überraschend, dass der Einsatz der oben genannten UV-Stabilisatoren in Folien zu dem gewünschten Ergebnis führte. Der Fachmann hätte vermutlich zunächst versucht, eine gewisse UV-Stabilität über ein

Antioxidanz zu erreichen, hätte jedoch bei Bewitterung festgestellt, dass die Folie schnell gelb wird.

Vor dem Hintergrund, dass UV-Stabilisatoren das UV-Licht absorbieren und somit Schutz bieten, hätte der Fachmann wohl handelsübliche Stabilisatoren eingesetzt. Dabei hätte er festgestellt, dass

- der UV-Stabilisator eine mangelnde thermische Stabilität hat und sich bei Temperaturen zwischen 200 °C und 240 °C zersetzt und ausgast;
- er große Mengen (ca. 10 bis 15 Gew.-%) UV-Stabitisator einarbeiten muß, damit das UV-Licht absorbiert wird und damit die Folie nicht geschädigt wird.

Bei diesen hohen Konzentrationen hätte er festgestellt, dass die Folie schon nach der Herstellung gelb ist, bei Gelbwertunterschieden (YID) um die 25. Des Weiteren hätte erfestgestellt, dass die mechanischen Eigenschaften negativ beeinflusstwerden. Beim Verstrecken hätte er ungewöhnliche Probleme bekommen wie

- Abrisse wegen mangelnder Festigkeit, d. h. E-Modul zu niedrig;
- Düsenabtagerungen, was zu Profilschwankungen führt;
- Walzenablagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Daher war es mehr als überraschend, dass bereits mit niedrigen Konzentrationen des UV-Stabilisators ein hervorragender UV-Schutz erzielt wurde. Sehr überraschend war, dass sich bei diesem hervorragenden UV-Schutz

- der Gelbwert der Folie im Vergleich zu einer nicht stabilisierten Folie im Rahmen der Meßgenauigkeit nicht ändert;
- sich keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf high speed film lines bis zu Geschwindigkeiten von 420 m/min produktionssicher hergestellt werden kann.

In einer bevorzugten Ausführungsform enthält die erfindungsgemäße Folie als Hauptbestandteil ein kristallisierbares Polyethylenterephthalat und 0,01 Gew.-% bis 5,0 Gew.-% 2-(4,6-Diphenyl-1,3,5-triazin-2-yl)-5-(hexyl)oxyphenol oder 0,01 Gew.-% bis 5,0 Gew.-% 2,2'-Methylen-bis(6-(2H-benzotriazol-2-yl)-4-(1,1,2,2-tetramethylpropyl)-phenol als UV-Stabilisator sowie 0,3 Gew.-% bis 25 Gew.-% Titandioxid mit einem Teilchendurchmesser von vorzugsweise 0,10 bis 0,50 µm als Weißpigment wobei ein Titandioxid vom Rutil-Typ bevorzugt wird. Anstelle von Titandioxid kann auch Bariumsulfat mit einem Teilchendurchmesser von 0,20 bis 1,20 µm als Weißpigment eingesetzt werden, wobei die Konzentration zwischen 1,0 Gew.% und 25 Gew.-% liegt. In einer anderen bevorzugten Ausführungsform können auch Mischungen dieser Weißpigmente oder eine Mischung von einem dieser Weißpigmente mit einem anderen eingesetzt werden. In einer weiteren bevorzugten Ausführungsform können auch Mischungen der beiden obengenannten UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht der Schicht des kristallisierbare Polyethylenterephthalats, liegt.

Die weiße, UV-stabilisierte, thermoformbare Folie hat folgendes Eigenschaftsprofil:

Der Oberflächenglanz, gemessen nach DIN 67530 (Messwinkel 20°) ist größer als 15, vorzugsweise größer als 20.

Die Lichttransmission (Transparenz), gemessen nach ASTM-D 1003, ist kleiner als 80%, vorzugsweise kleiner als 70%. Die Einfärbung ist homogen und streifenfrei über die Lauflänge und die Folienbreite.

Der E-Modul (ISO 527-1-2) in Längsrichtung liegt bei größer 3200 $N/mm^2$, vorzugsweise bei größer 3600 $N/mm^2$. Der E-Modul (ISO 527-1-2) in Querrichtung liegt bei größer 3500 $N/mm^2$, vorzugsweise bei größer 3800 $N/mm^2$.

Polyethylenterephthalate mit einem Kristallitschmelzpunkt $T_m$, gemessen mit DSC (Differential Scanning Calorimetry) mit einer Aufheizgeschwindigkeit von 10°C/min, von 220 °C bis 280 °C, vorzugsweise von 250 °C bis 270 °C, mit einem Kristallisationstemperaturbereich $T_c$ zwischen 75 °C und 280 °C, vorzugsweise 75 °C bis 260 °C, einer Glasübergangstemperatur $T_g$ zwischen 65 °C und 90 °C und mit einer Dichte, gemessen nach DIN 53479, von 1,30 bis 1,45 $g/cm^3$ und einer Kristallinität zwischen 5 % und 65 %, vorzugsweise zwischen 25 % und 65 %, stellen bevorzugte Polymere zur Herstellung der erfindungsgemäßen Folie dar.

Erfindungswesentlich ist, dass der kristallisierbare Thermoplast ein Diethylenglykolgehalt von ≥ 1,0 Gew.%, vorzugsweise ≥ 1,2 Gew.%, insbesondere ≥ 1,3 Gew.% und/oder ein Polyethytenglykolgehalt von ≥ 1,0 Gew.%, vorzugsweise ≥ 1,2 Gew.%, insbesondere ≥ 1,3 Gew.% und/oder ein Isophthalsäuregehalt von 3 Gew.-% bis 10 Gew.-%

aufweist.

Der DEG-Gehalt und/oder PEG-Gehalt und/oder IPA-Gehaft des Thermoplasten werden beim Rohstoffhersteller während des Polymerisationsprozesses eingestellt.

Das Schüttgewicht, gemessen nach DIN 53466, liegt vorzugsweise zwischen 0,75 $kg/dm^3$ und 1,0 $kg/dm^3$, und besonders bevorzugt zwischen 0,80 $kg/dm^3$ und 0,90 $kg/dm^3$.

Die Polydispersität $M_w/M_n$ des Polyethylenterephthalats gemessen mittels Gelpermeationschromatographie liegt vorzugsweise zwischen 1,5 und 6,0 und besonders bevorzugt zwischen 2,0 und 3,5.

Die weiße Polyethylenterephthalat-Folie, die mindestens ein Weißpigment und einen UV-Stabilisator enthält, kann sowohl einschichtig als auch mehrschichtig sein.

In der mehrschichtigen Ausführungsform ist die Folie aus mindestens einer Kemschicht und mindestens einer Deckschicht aufgebaut, wobei insbesondere ein dreischichtiger A-B-A oder A-B-C Aufbau bevorzugt ist.

Für diese Ausführungsform ist es wesentlich, dass das Polyethylenterephthalat der Kemschicht eine ähnliche Standardviskosität besitzt wie das Polyethylenterephthalat der Deckschicht(en), die an die Kemschicht angrenzt (angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen.

In dieser Ausführungsform haben die Thermoplaste der Deckschichten ebenfalls eine ähnliche Standardviskosität wie das Polyethylenterephthalat der Kemschicht.

In der mehrschichtigen Ausführungsform ist das Weißpigment vorzugsweise in der Kemschicht enthalten. Bei Bedarf können auch die Deckschichten mit Weißpigment ausgerüstet sein.

In der mehrschichtigen Ausführungsform ist der UV-Stabilisator vorzugsweise in der bzw. den Deckschichten enthalten. Jedoch kann nach Bedarf auch die Kemschicht mit UV-Stabilisatoren ausgerüstet sein.

Anders als in der einschichtigen Ausführungsform bezieht sich bei der Mehrschichtfolie die Konzentration des oder der Stabilisatoren auf das Gewicht der Thermoplasten in der mit UV-Stabilisator(en) ausgerüsteten Schicht.

Ganz überraschend haben Bewitterungsversuche nach der Testspezifikation ISO 4892 mit dem Atlas CI65 Weather Ometer gezeigt, dass es im Falle einer dreischichtigen Folie durchaus ausreichend ist, die 0,5 µm bis 2 µm dicken Deckschichten mit UV-Stabilisatoren auszurüsten, um eine verbesserte UV-Stabilität zu erreichen.

Dadurch werden die mit der bekannten Koextrusionstechnologie hergestellten UV-stabilisierten, mehrschichtigen Folien im Vergleich zu den komplett UV-stabilisierten Monofolien wirtschaftlich extrem interessant, da deutlich weniger UV-Stabilisator zu einer vergleichbaren UV-Stabilität benötigt wird.

Die Folie kann auch mindestens einseitig mit einer kratzfesten Beschichtung, mit einem Copolyester oder mit einem Haftvermittler versehen sein.

Bewitterungstests haben ergeben, dass die erfindungsgemäßen UV-stabilisierten Folien selbst nach 5 bis 7 Jahren (aus den Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Bei der Herstellung der Folie wurde festgestellt, dass sich die UV-stabilisierte Folie hervorragend in Längs- und in Querrichtung ohne Abrisse orientieren läßt. Des Weiteren wurden keinerlei Ausgasungen des UV-Stabilisators im Produktionsprozess gefunden, was erfindungswesentlich ist, da die meisten herkömmlichen UV-Stabilisatoren bei Extrusionstemperaturen über 260 °C störende, unangenehme Ausgasungen zeigen und damit untauglich sind.

Des Weiteren ist die Folie bzw. der Formkörper ohne Umweltbelastung und ohne merkliche Verschlechterung der optischen und der mechanischen Eigenschaften problemlos rezyklierbar, wodurch sie sich beispielsweise für die Verwendung als kurzlebige Werbeschilder, beim Messebau und für andere Werbeartikel, wo Brandschutz und Thermoformbarkeit gewünscht wird, eignet.

Darüberhinaus läßt sich die Folie ohne Vortrocknen thermoformen, so dass komplexe Formkörper mit hervorragender Detailwiedergabe daraus hergestellt werden können.

Der Thermoformprozess umfaßt in der Regel die Schritte Vortrocknen, Aufheizen, Formen, Abkühlen, Entformen, Tempern. Beim Thermoformprozess wurde festgestellt, dass sich die Folien gemäß der Erfindung ohne vorheriges Vortrocknen überraschenderweise tiefziehen fassen. Dieser Vorteil im Vergleich zu tiefziehfähigen Polycarbonat- oder Polymethacrylat-Folien, bei denen Vortrocknungszeiten von 10-15 Stunden, je nach Dicke bei Temperaturen von 100°C °C bis 120 °C erforderlich sind, reduziert drastisch die Kosten des Umformprozesses. Daneben war sehrüberraschend, dass die Detailwiedergabe des Formkörpers hervorragend ist.

Für das Thermoformen haben sich folgende Verfahrensparameter im allgemeinen als geeignet erwiesen:

| **Verfahrensschritt** | **Folie gemäß der Erfindung** |
|---|---|
| Vortrocknen | nicht erforderlich |

(fortgesetzt)

| Verfahrensschritt | Folie gemäß der Erfindung |
|---|---|
| Temperatur der Form °C | 100 bis 140 |
| Aufheizzeit pro 10 μm Foliendicke | < 5 sec pro 10 μm Foliendicke |
| Folientemperatur beim Verformen °C | 100 bis 160 |
| Möglicher Verstreckfaktor | 1,5 bis 4,0 |
| Detailwiedergabe | hervorragend |
| Schrumpf (Schwindung) % | < 1,5 |

Des Weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder oder anderer Werbeartikel eignet.

Die Herstellung der erfindungsgemäßen, weißen, UV-stabilisierten, thermoformbaren Folie kann beispielsweise nach einem Extrusionsverfahren in einer Extrusionsstraße erfolgen.

Hier wird ein kristallisierbarer Thermoplast in mindestens einem Extruder aufgeschmolzen und die erhaltene Polymerschmelze entsprechend der Zusammensetzung der Folienschicht einer Düse oder die erhaltenen Polymerschmelzen entsprechend den Zusammensetzungen der Deck- und Basisschichten einer Mehrschichtdüse zugeführt, aus der Düse auf eine Abkühlwalze extrudiert und die so erhaltene Vorfolie anschließend biaxial verstreckt und hitzefixiert.

Erfindungsgemäß kann das Weißpigment und der UV-Stabilisator bereits beim Thermoplast-Rohstoffhersteller zudosiert werden oder bei der Folienherstellung in den Extruder dosiert werden.

Besonders bevorzugt ist die Zugabe des UV-Stabilisators und des Weißpigments über die Masterbatch-Technologie. Das Lichtschutzmittel bzw. das Weißpigment wird in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind (z.B. PEN, PBT), in Frage.

Wichtig bei der Masterbatch Technologie ist, dass die Komgröße und das Schüttgewicht des Masterbatches ähnlich der Komgröße und dem Schüttgewicht des Thermoplasten ist, so dass eine homogene Verteilung und damit eine homogene UV-Stabilisierung und ein homogener Weißgrad erreicht wird.

Eine eventuell notwendige Trocknung des/der Masterbatches/Masterbatche bzw. des Polyethylenterephthalates vor der Extrusion erfolgt vorzugsweise für 0, 5 bis 2 Stunden bei 160 bis 180 °C.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 °C bis $T_G$ + 60 °C ($T_G$ = Glastemperatur), das Streckverhältnis der Längsstreckung liegt üblicherweise bei 2 bis 6, insbesondere bei 3 bis 4,5, das der Querstreckung liegt bei 2 bis 5, insbesondere bei 3 bis 4,5 und das der ggf. durchgeführten zweiten Längs- bzw. Querstreckung liegt bei 1,1 bis 5. Die erste Längsstrekkung, kann ggf. gleichzeitig mit der Querstreckung (Simultanstreckung) durchgeführt werden. Anschließend folgt die Thermofixierung der Folie bei Ofentemperaturen von 180 bis 260 °C, insbesondere bei 220 bis 250 °C. Anschließend wird die Folie abgekühlt und gewickelt.

Durch die überraschende Kombination ausgezeichneter Eigenschaften eignet sich die erfindungsgemäße, weiße Folie hervorragend für eine Vielzahl verschiedener Verwendungen, beispielsweise für Innenraumverkleidungen, für Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium, Lebensmittelanwendungen.

Aufgrund der guten UV-Stabilität eignet sich die erfindungsgemäße, weiße Folie ebenfalls für Außenanwendungen, wie z.B. für Überdachungen, Außenverkleidungen, Abdeckungen, Anwendungen im Bausektor, Lichtwerbeprofile und im Verkehrssektor.

Aufgrund der Thermoformbarkeit eignet sich die erfindungsgemäße Folie zum Thermoformen beliebiger Formkörper für Innen- und Außenanwendungen.

Die Erfindung wird im folgenden anhand von Ausführungsbeispielen näher erläutert, ohne dadurch beschränkt zu werden.

Die Messung der einzelnen Eigenschaften erfolgt dabei gemäß der folgenden Normen bzw. Verfahren.

**Meßmethoden**

**DEG-Gehalt/PEG-Gehalt/IPA-Gehalt**

Der DEG-/PEG-/IPA-Gehalt wird gaschromatografisch nach Verseifung in methanolischer KOH und Neutralisation mit wässrigem HCl bestimmt.

**Oberflächenglanz**

Der Oberflächenglanz wird bei einem Messwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Messgerät "®HAZEGARD plus" nach ASTM D 1003 gemessen.

**Oberflächendefekte, homogene Einfärbung**

Die Oberflächendefekte, wie z. B. Risse, Versprödungen, Stippen, Orangenhaut, Blasen usw., und die homogene Einfärbung werden visuell bestimmt.

**Mechanische Eigenschaften**

Der E-Modul, die Reißfestigkeit und die Reißdehnung werden in Längs- und Querrichtung nach ISO 527-1-2 gemessen.

**Dichte**

Die Dichte wird nach DIN 53479 bestimmt.

**SV (DCE), IV (DCE)**

Die Standardviskosität SV (DCE) wird angelehnt an DIN 53726 in Dichloressigsäure gemessen.

Die intrinsische Viskosität (IV) berechnet sich wie folgt aus der Standardviskosität (SV)

$$IV\ (DCE) = 6{,}67 \cdot 10^{-4}\ SV\ (DCE) + 0{,}118$$

**Thermische Eigenschaften**

Die thermischen Eigenschaften wie Kristallitschmelzpunkt $T_m$, Kristallisationstemperaturbereich $T_c$, Nach-(Kalt-)Kristallisationstemperatur $T_{CN}$ und Glasübergangstemperatur $T_g$ werden mittels Differential Scanning Calorimetrie (DSC) bei einer Aufheizgeschwindigkeit von 10 °C/min gemessen.

**Molekulargewicht, Polydispersität**

Die Molekulargewichte $M_w$ und $M_n$ und die resultierende Polydispersität $M_w/M_n$ werden mittels Gelpermeationschromatographie (GPC) gemessen.

**Bewitterung (beidseitig), UV-Stabilität**

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |

(fortgesetzt)

| | |
|---|---|
| Bestrahlung | 0,5 W/m$^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

## Gelbwert

Der Gelbwert (YID) ist die Abweichung von der Farblosigkeit in Richtung "Gelb" und wird gemäß DIN 6167 gemessen. Gelbwert (YID) von < 5 sind visuell nicht sichtbar.

In den nachstehenden Beispielen und Vergleichsbeispielen handelt es sich jeweils um einschichtige und mehrschichtige weiße Folien unterschiedlicher Dicke, die auf der beschriebenen Extrusionsstraße hergestellt werden.

Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, dem Gelbwert (YID), der Oberflächendefekte, der Lichttransmission und des Glanzes geprüft.

## Beispiel 1

Es wird eine 50 µm dicke, weiße Folie hergestellt, die als Hauptbestandteil Polyethylenterephthalat, 7,0 Gew.-% Titandioxid und 1,0 Gew.-% des UV-Stabilisators 2-(4,6-Diphenyl-1,3,5-triazin 2-yl)-5-(hexyl)oxyphenol (® Tinuvin 1577 der Firma Ciba-Geigy) enthält.

Das Titandioxid ist vom Rutiltyp, hat einen mittleren Teilchendurchmesservon 0,20 µm und ist mit $Al_2O_3$ gecoatet.

® Tinuvin 1577 hat einen Schmelzpunkt von 149 °C und ist bis ca. 330 °C thermisch stabil.

Zwecks homogener Verteilung werden 7,0 Gew.-% Titandioxid und 1,0 Gew.-% des UV-Stabilisators direkt beim Rohstoffhersteller in das Polyethylenterephthalat eingearbeitet.

Das Polyethylenterephthalat, aus dem die weiße Folie hergestellt wird, hat eine Standardviskosität SV (DCE) von 810, was einer intrinsischen Viskosität IV (DCE) von 0,658 dl/g entspricht. Der Feuchtigkeitsgehalt liegt bei < 0,2 % und die Dichte (DIN 53479) bei 1,41 g/cm$^3$. Die Kristallinität beträgt 59 %, wobei der Kristallitschmelzpunkt nach DSC-Messungen bei 258 °C liegt. Der Kristallisationstemperaturbereich $T_c$ liegt zwischen 83 °C und 258 °C, wobei die Nachkristallisationstemperatur (auch Kaltkristallisationstemperatur) $T_{CN}$ bei 144 °C liegt. Die Polydispersität $M_w/M_n$ des Polyethylenterephthalats beträgt 2,14. Die Glasübergangstemperatur liegt bei 83 °C. Der DEG-Gehalt, der beim Rohstoffhersteller eingestellt wird, liegt bei 1,6 Gew.-%.

Die einzelnen Verfahrensschritte waren: .

| | | |
|---|---|---|
| Längsstreckung | Temperatur | 85-135 °C |
| | Längsstreckverhältnis | 4,0: 1 |
| Querstreckung | Temperatur | 85-135 °C |
| | Querstreckverhältnis | 4,0: 1 |
| Fixierung | Temperatur | 230 °C |

Die hergestellte weiße PET-Folie hat folgendes Eigenschaftsprofil:

| | |
|---|---|
| Dicke | 50 µm |
| Oberflächenglanz 1. Seite | 72 |
| (Messwinkel 20°) 2. Seite | 68 |
| Lichttransmission | 28 % |
| Oberflächendefekte | keine |
| E-Modul längs | 4300 N/mm$^2$ |
| E-Modul quer | 5600 N/mm$^2$ |

(fortgesetzt)

| | |
|---|---|
| Reißfestigkeit längs | 190 N/mm$^2$ |
| Reißfestigkeit quer | 280 N/mm$^2$ |
| Reißdehnung längs | 170 % |
| Reißdehnung quer | 85 % |
| Gelbwert (YID) | 48 |
| Einfärbung | homogen |

Nach je 1000 Stunden Bewitterung pro Seite mit dem Atlas Ci 65 Weather Ometer zeigt die PET-Folie folgende Eigenschaften:

| | |
|---|---|
| Dicke | 50 µm |
| Oberflächenglanz 1. Seite | 70 |
| (Messwinkel 20°) 2. Seite | 66 |
| Lichttransmission | 27 % |
| Oberflächendefekte | keine |
| Gelbwert (YID) | 49 |
| E-Modul längs | 4150 N/mm$^2$ |
| E-Modul quer | 5600 N/mm$^2$ |
| Reißfestigkeit längs | 170 N/mm$^2$ |
| Reißfestigkeit quer | 250 N/mm$^2$ |
| Reißdehnung längs | 150 % |
| Reißdehnung quer | 70 % |
| Einfärbung | homogen |

**Beispiel 2**

Analog Beispiel 1 wird eine weiße Folie hergestellt, wobei der UV-Stabilisator 2-(4,6-Diphenyl-1,3,5-triazin-2-yl)-5-(hexyl)-oxyphenol (®Tinuvin 1577) in Form eines Masterbatches zudosiert wird. Das Masterbatch setzt sich aus 5 Gew.-% ®Tinuvin 1577 als Wirkstoffkomponente und 95 Gew.-% des Polyethylenterephthalats aus Beispiel 1 zusammen.

Vor der Extrusion werden 90 Gew.-% des mit Titandioxid ausgerüsteten Polyethylenterephthalats aus Beispiel 1 mit 10 Gew.-% des Masterbatches bei 170 °C getrocknet. Die Extrusion und Folienherstellung erfolgt analog zu Beispiel 1.

Die hergestellte weiße PET-Folie hat folgendes Eigenschaftsprofil:

| | |
|---|---|
| Dicke | 50 µm |
| Oberflächenglanz 1. Seite | 74 |
| (Messwinkel 20°) 2. Seite | 71 |
| Lichttransmission | 27 % |
| Oberflächendefekte | keine |
| E-Modul längs | 4200 N/mm$^2$ |
| E-Modul quer | 5650 N/mm$^2$ |
| Reißfestigkeit längs | 160 N/mm$^2$ |
| Reißfestigkeit quer | 250 N/mm$^2$ |
| Reißdehnung längs | 160% |
| Reißdehnung quer | 75 % |
| Gelbwert (YID) | 46 |
| Einfärbung | homogen |

Nach je 1000 Stunden Bewitterung pro Seite mit Atlas Ci 65 Weather Ometer zeigt die PET-Folie folgende Eigenschaften:

| | |
|---|---|
| Dicke | 50 µm |
| Oberflächenglanz 1. Seite | 72 |
| (Messwinkel 20°) 2. Seite | 70 |
| Lichttransmission | 25 % |
| Trübung | 4,1 % |
| Oberflächendefekte | keine |
| Gelbwert (YID) | 47 |
| E-Modul längs | 4050 $N/mm^2$ |
| E-Modul quer | 5500 $N/mm^2$ |
| Reißfestigkeit längs | 151 $N/mm^2$ |
| Reißfestigkeit quer | 238 $N/mm^2$ |
| Reißdehnung längs | 152 % |
| Reißdehnung quer | 68 % |

**Beispiel 3**

Analog Beispiel 2 wird eine weiße 350 µm dicke Folie hergestellt.
Die hergestellte PET-Folie hat folgendes Eigenschaftsprofil:

| | |
|---|---|
| Dicke | 350 µm |
| Oberflächenglanz 1. Seite | 70 |
| (Messwinkel 20°) 2. Seite | 60 |
| Lichttransmission | 10 % |
| Oberflächendefekte | keine |
| Gelbwert (YID) | 50 |
| E-Modul längs | 3600 $N/mm^2$ |
| E-Modul quer | 4200 $N/mm^2$ |
| Reißfestigkeit längs | 180 $N/mm^2$ |
| Reißfestigkeit quer | 200 $N/mm^2$ |
| Reißdehnung längs | 220 % |
| Reißdehnung quer | 190 % |

Nach je 1000 Stunden Bewitterung pro Seite mit dem Atlas Ci 65 Weather Ometer zeigt die PET-Folie folgende Eigenschaften:

| | |
|---|---|
| Dicke | 350 µm |
| Oberflächenglanz 1. Seite | 68 |
| (Messwinkel 20°) 2. Seite | 65 |
| Lichttransmission | 9% |
| Oberflächendefekte | keine |
| Gelbwert (YID) | 52 |
| E-Modul längs | 3500 $N/mm^2$ |
| E-Modul quer | 4050 $N/mm^2$ |
| Reißfestigkeit längs | 165 $N/mm^2$ |
| Reißfestigkeit quer | 185 $N/mm^2$ |
| Reißdehnung längs | 200 % |
| Reißdehnung quer | 170 % |

**Beispiel 4**

Nach der Koextrusionstechnologie wird eine 50 µm dicke mehrschichtige PET-Folie mit der Schichtreihenfolge A-B-A hergestellt, wobei B die Kernschicht und A die Deckschichten repräsentieren. Die Kernschicht B ist 48 µm

dick und die beiden Deckschichten, welche die Kemschicht überziehen, sind jeweils 1 µm dick.

Das für die Kernschicht B eingesetzte mit Titandioxid ausgerüstete Polyethylenterephthalat ist identisch mit dem aus Beispiel 2. Das Polyethylenterephthalat der Deckschichten A ist identisch mit dem Polyethylenterephthalat aus Beispiel 2, enthält aber kein Titandioxid.

Analog Beispiel 2 wird das 5 Gew.-%ige ® Tinuvin 1577 Masterbatch eingesetzt, wobei aber lediglich den 1 µm dicken Deckschichten 20 Gew.-% des Masterbatches über die Masterbatchtechnologie zudosiert werden.

Die hergestellte weiße, mehrschichtige, in den Deckschichten UV-stabilisierte PET-Folie hat folgendes Eigenschaftsprofil:

| | |
|---|---|
| Schichtaufbau | A-B-A |
| Gesamtdicke | 50 µm |
| Oberflächenglanz 1. Seite | 124 |
| (Messwinkel 20°) 2. Seite | 119 |
| Lichttransmission | 30 % |
| Oberflächendefekte | keine |
| E-Modul längs | 4300 $N/mm^2$ |
| E-Modul quer | 5720 $N/mm^2$ |
| Reißfestigkeit längs | 180 $N/mm^2$ |
| Reißfestigkeit quer | 265 $N/mm^2$ |
| Reißdehnung längs | 165 % |
| Reißdehnung quer | 85 % |
| Gelbwert (YID) | 40 |
| Einfärbung | homogen |

Nach 1000 Stunden Bewitterung pro Seite mit dem Atlas CI 65 Weather Ometer zeigt die mehrschichtige Folie folgende Eigenschaften:

| | |
|---|---|
| Schichtaufbau | A-B-A |
| Gesamtdicke | 50 µm |
| Oberflächenglanz 1. Seite | 120 |
| (Messwinkel 20°) 2. Seite | 115 |
| Lichttransmission | 28% |
| Oberflächendefekte | keine |
| E-Modul längs | 4175 $N/mm^2$ |
| E-Modul quer | 5650 $N/mm^2$ |
| Reißfestigkeit längs | 165 $N/mm^2$ |
| Reißfestigkeit quer | 250 $N/mm^2$ |
| Reißdehnung längs | 155% |
| Reißdehnung quer | 75 % |
| Gelbwert (YID) | 42 |
| Einfärbung | homogen |

**Thermoformbarkeit**

Die Folien aus den Beispielen 1 bis 3 lassen sich auf handelsüblichen Tiefziehmaschinen, z.B. von Fa. Illig, ohne Vortrocknung zu Formkörpern thermoformen. Die Detailwiedergabe der Formkörper ist bei einer homogenen Oberfläche hervorragend.

**Vergleichsbeispiel 1**

Analog Beispiel 1 wird eine 50 µm dicke PET-Monofolie hergestellt. Im Gegensatz zu Beispiel 1 enthält die Folie keine UV-Stabilisator. Das eingesetzte PET hat einen DEG-Gehalt von 0,6 Gew.-%.

Die hergestellte, unstabilisierte, weiße Folie hat folgendes Eigenschaftsprofil:

| | |
|---|---|
| Dicke | 50 µm |
| Oberflächenglanz 1. Seite | 70 |
| (Messwinkef 20°) 2. Seite | 67 |
| Lichttransmission | 27 % |
| Oberflächendefekte | keine |
| E-Modul längs | 4350 $N/mm^2$ |
| E-Modul quer | 5800 $N/mm^2$ |
| Reißfestigkeit längs | 185 $N/mm^2$ |
| Reißfestigkeit quer | 270 $N/mm^2$ |
| Reißdehnung längs | 160 % |
| Reißdehnung quer | 80 % |
| Gelbwert (YID) | 49 |

Nach 1000 Stunden Bewitterung pro Seite mit dem Atlas Cl 65 Weather Ometer weist die Folie an den Oberflächen Risse und Versprödungserscheinungen auf. Ein präzises Eigenschaftsprofil kann daher nicht mehr gemessen werden. Außerdem zeigt die Folie eine visuell sichtbare höhere Gelbfärbung.

Die Folie ist unzureichend thermoformbar.

**Patentansprüche**

1. Weiße, thermoformbare Folie, die als Hauptbestandteil einen kristallisierbaren Thermoplasten enthält, **dadurch gekennzeichnet, dass** sie mindestens ein Weißpigment und mindestens einen UV-Stabilisator als Lichtschutzmittel enthält, wobei der UV-Stabilisator und das Weißpigment als Masterbatch bei der Folienherstellung direkt zudosiert wird und der kristallisierbare Thermoplast ein Diethylenglykolgehalt von ≥ 1,0 Gew.% aufweist.

2. Folie nach Anspruch 1, **dadurch gekennzeichnet, dass** der kristallisierbare Thermoplast einen Diethylenglykolgehalt von ≥ 1,2 Gew.%, vorzugsweise ≥ 1,3 Gew.%, und/oder einen Polyethylenglykolgehalt von ≥ 1,0 Gew.%, vorzugsweise ≥ 1,2 Gew.%, insbesondere ≥ 1,3 Gew.%, und/oder einen Isophthalsäuregehalt von 3,0 Gew.-% bis 10,0 Gew.-% aufweist.

3. Folie gemäß Anspruch 1, **dadurch gekennzeichnet, dass** die Konzentration des UV-Stabilisators im Bereich von 0,01 bis 5 Gew.-%, bezogen auf das Gewicht der Schicht des kristallisierbaren Thermoplasten, liegt.

4. Folie gemäß Anspruch 1 oder 2, **dadurch gekennzeichnet, dass** der UV-Stabilisator ausgewählt ist unter 2-Hydroxybenzotriazolen und Triazinen.

5. Folie gemäß Anspruch 4, **dadurch gekennzeichnet, dass** als UV-Stabilisator mindestens eine Verbindung ausgewählt unter 2-(4,6-Diphenyl-1,3,5-triazin-2-yl)-5-(hexyl)oxy-phenol und 2,2'-Methylen-bis(6-(2H-benzotriazot-2-yl)-4-(1,1,2,2-tetramethylpropyl)-phenol verwendet wird.

6. Folie gemäß den Ansprüchen 1 bis 5, **dadurch gekennzeichnet, dass** der kristallisierbare Thermoplast eine Kristallinität aufweist, die im Bereich von 5 bis 65 % liegt.

7. Folie gemäß den Ansprüchen 1 bis 6, **dadurch gekennzeichnet, dass** der kristallisierbare Thermoplast ausgewählt ist unter Polyethylenterephthalat, Polybutylenterephthalat und einem Polyethylennaphthalat.

8. Folie gemäß Anspruch 7, **dadurch gekennzeichnet, dass** als kristallisierbarer Thermoplast Polyethylenterephthalat verwendet wird.

9. Folie gemäß Anspruch 7 oder 8, **dadurch gekennzeichnet, dass** die Folie Rezyklat enthält.

10. Folie gemäß den Ansprüchen 1 bis 9, **dadurch gekennzeichnet, dass** das Weißpigment ausgewählt ist aus einem oder mehreren der Weißpigmente Titandioxid, Bariumsulfat, Calciumcarbonat, Kaolin und Siliciumdioxid.

**11.** Folie gemäß Anspruch 10, **dadurch gekennzeichnet, dass** das Weißpigment Titandioxid ist.

**12.** Folie gemäß den Ansprüchen 1 bis 11, **dadurch gekennzeichnet, dass** das Weißpigment beschichtet ist.

**13.** Folie gemäß den Ansprüchen 1 bis 12, **dadurch gekennzeichnet, dass** das Weißpigment in einer Menge von 0,3 Gew.-% - 25 Gew-%, bezogen auf die Basisschicht, in der das Weißpigment enthalten ist, vorhanden ist.

**14.** Folie gemäß den Ansprüchen 1 bis 13, **dadurch gekennzeichnet, dass** das Weißpigment eine mittlere Teilchengröße von 0,10 bis 0,30 μm besitzt.

**15.** Folie gemäß den Ansprüchen 1 bis 14, **dadurch gekennzeichnet, dass** der Oberflächenglanz, gemessen nach DIN 67530 (Messwinkel 20°), größer als 15 ist.

**16.** Folie gemäß den Ansprüchen 1 bis 14, **dadurch gekennzeichnet, dass** die Lichttransmission, gemessen nach ASTM D 1003, kleiner als 80 % beträgt.

**17.** Folie gemäß den Ansprüchen 1 bis 14, **dadurch gekennzeichnet, dass** der E-Modul, gemessen nach ISO 527-1-2, in Längsrichtung größer als 3360 $N/mm^2$ und in Querrichtung größer als 4800 $N/mm^2$ ist.

**18.** Folie gemäß den Ansprüchen 1 bis 17, **dadurch gekennzeichnet, dass** sie einen einschichtigen Aufbau aufweist.

**19.** Folie gemäß den Ansprüchen 1 bis 17, **dadurch gekennzeichnet, dass** die Folie eine mehrschichtige Struktur mit mindestens einer Deckschicht und mindestens einer Kernschicht aufweist.

**20.** Folie gemäß Anspruch 19, wobei die mehrschichtige Struktur mit zwei Deckschichten und einer zwischen den Deckschichten liegende Kemschicht aufweist.

**21.** Folie gemäß den Ansprüchen 19 oder 20, **dadurch gekennzeichnet, dass** mindestens ein Weißpigment in der Basisschicht enthalten ist.

**22.** Folie gemäß den Ansprüchen 19 oder 20, **dadurch gekennzeichnet, dass** mindestens ein UV-Stabilisator in der/den Deckschichten enthalten ist.

**23.** Verfahren zur Herstellung einer weißen Folie gemäß den Ansprüchen 1 bis 22, **dadurch gekennzeichnet, dass** ein kristallisierbarer Thermoplast in mindestens einem Extruder aufgeschmolzen wird und die erhaltene Polymerschmelze entsprechend der Zusammensetzung der Folienschicht einer Düse oder die erhaltenen Polymerschmelzen entsprechend der Zusammensetzungen der Deck- und Basisschichten einer Mehrschichtdüse zugeführt werden, aus der Düse auf eine Abkühlwalze extrudiert werden und die so erhaltene Vorfolie anschließend biaxial verstreckt und hitzefixiert wird, wobei die Polymerschmelze(n) für die Basisschicht und/oder für die Deckschicht(en) mindestens ein Weißpigment enthalten und die Schmelze für die Deckschicht(en) mindestens einen UV-Stabilisator enthalten.

**24.** Verfahren gemäß Anspruch 23, **dadurch gekennzeichnet, dass** die Zugabe des Weißpigments und/oder des UV-Stabilisators über die Masterbatchtechnologie durchgeführt wird.

**25.** Verwendung einer Folie gemäß den Ansprüchen 1 bis 22 als Innenraumverkleidung, als Display, für Schilder, für Schutzverglasungen, im Beleuchtungssektor, im Laden- und Regalbau, als Werbeartikel, Kaschiermedium, für Gewächshäuser, Überdachungen, Außenverkleidungen, Abdeckungen, im Bausektor, als Lichtwerbeprofil, Schattenmatte oder in Elektroanwendungen.

## Claims

**1.** A white, thermoformable film in which the principal constituent present is a crystallizable thermoplastic, wherein the film comprises at least one white pigment and at least one UV stabilizer as light stabilizer, where the UV stabilizer and the white pigment are fed directly as a masterbatch during the production of the film and the crystallizable thermoplastic has a diethylene glycol content of ≥ 1.0% by weight.

**2.** The film as claimed in claim 1, wherein the crystallizable thermoplastic has a diethylene glycol content of ≥ 1.2% by weight, preferably ≥ 1.3% by weight, and/or a polyethylene glycol content of ≥ 1.0% by weight, preferably ≥ 1.2% by weight, in particular ≥ 1.3% by weight, and/or an isophthalic acid content of from 3.0 to 10.0% by weight.

**3.** The film as claimed in claim 1, wherein the concentration of the UV stabilizer is from 0.01 to 5% by weight, based on the weight of the layer of the crystallizable thermoplastic.

**4.** The film as claimed in claim 1 or 2, wherein the UV stabilizer has been selected from the group consisting of 2-hydroxybenzotriazoles and triazines.

**5.** The film as claimed in claim 4, wherein the UV stabilizer used is at least one compound selected from the group consisting of 2-(4,6-diphenyl-1,3,5-triazin-2-yl)-5-hexyloxyphenol and 2,2'-methylenebis(6-(2H-benzotriazol-2-yl)-4-(1,1,2,2-tetramethylpropyl)phenol.

**6.** The film as claimed in any of claims 1 to 5, wherein the crystallizable thermoplastic has a crystallinity of from 5 to 65%.

**7.** The film as claimed in any of claims 1 to 6, wherein the crystallizable thermoplastic has been selected from the group consisting of polyethylene terephthalate, polybutylene terephthalate and polyethylene naphthalate.

**8.** The film as claimed in claim 7, wherein the crystallizable thermoplastic used comprises polyethylene terephthalate.

**9.** The film as claimed in claim 7 or 8, wherein recycled material is present in the film.

**10.** The film as claimed in any of claims 1 to 9, wherein the white pigment is one or more white pigments selected from the group consisting of titanium dioxide, barium sulfate, calcium carbonate, kaolin and silicon dioxide.

**11.** The film as claimed in claim 10, wherein the white pigment is titanium dioxide.

**12.** The film as claimed in any of claims 1 to 11, wherein the white pigment has been coated.

**13.** The film as claimed in any of claims 1 to 12, wherein the amount of white pigment present, based on the base layer in which the white pigment is present, is from 0.3 to 25% by weight.

**14.** The film as claimed in any of claims 1 to 13, wherein the average particle size of the white pigment is from 0.10 to 0.30 μm.

**15.** The film as claimed in any of claims 1 to 14, wherein the surface gloss, measured to DIN 67530 (measurement angle 20°), is above 15.

**16.** The film as claimed in any of claims 1 to 14, wherein the luminous transmittance, measured to ASTM D 1003, is below 80%.

**17.** The film as claimed in any of claims 1 to 14, wherein the modulus of elasticity, measured to ISO 527-1-2, is above 3360 $N/mm^2$ longitudinally and above 4800 $N/mm^2$ transversely.

**18.** The film as claimed in any of claims 1 to 17, wherein the film has a single-layer structure.

**19.** The film as claimed in any of claims 1 to 17, wherein the film has a structure of more than one layer with at least one outer layer and with at least one core layer.

**20.** The film as claimed in claim 19, wherein the structure of more than one layer has two outer layers and a core layer lying between the outer layers.

**21.** The film as claimed in claim 19 or 20, wherein at least one white pigment is present in the base layer.

**22.** The film as claimed in claim 19 or 20, wherein at least one UV stabilizer is present in the outer layer(s).

23. A process for producing a white film as claimed in any of claims 1 to 22, which comprises melting a crystallizable thermoplastic in at least one extruder and introducing the resultant polymer melt corresponding to the composition of the film layer into a die, or introducing the resultant polymer melts corresponding to the compositions of the outer and base layers into a coextrusion die, and extruding these from the die onto a chill roll, and then biaxially orienting and heat-setting the resultant prefilm, where at least one white pigment is present in the polymer melt(s) for the base layer'and/or for the outer layer(s) and at least one UV stabilizer is present in the melt for the outer layer(s).

24. The process as claimed in claim 23, wherein the white pigment and/or UV stabilizer is added by way of masterbatch technology.

25. The use of a film as claimed in any of claims 1 to 22 as interior decoration, as a display, for placards, for protective glazing, in the lighting sector, in the fitting out of shops or of stores, as a promotional requisite or laminating medium, for greenhouses, roofing systems, exterior cladding, protective coverings, in the construction sector, as an illuminated advertising profile or a blind, or in electrical applications.

**Revendications**

1. Film thermoformable blanc comprenant à titre de composant principal un polymère thermoplastique cristallisable, **caractérisé en ce qu'**il contient au moins un pigment blanc et au moins un stabilisant UV à titre d'agent de protection contre la lumière, le stabilisant UV et le pigment blanc étant dosé et ajouté directement lors de la fabrication du film sous forme de Masterbatch et le polymère thermoplastique cristallisable présentant une teneur en diéthylène glycol de ≥ 1, 0 % en poids.

2. Film selon la revendication 1, **caractérisé en ce que** le polymère thermoplastique cristallisable présente une teneur en diéthylène glycol de ≥ 1,2 % en poids, de préférence ≥ 1,3 % en poids et/ou une teneur en polyéthylène glycol de ≥ à 1,0 % en poids, de préférence ≥ 1,2 % en poids, et en particulier ≥ 1,3% en poids et/ou une teneur en acide isophtalique de 3,0 % en poids à 10,0 % en poids.

3. Film selon la revendication 1, **caractérisé en ce que** la concentration du stabilisant UV est comprise entre 0,01 à 5 % en poids par rapport au poids de la couche en polymère thermoplastique cristallisable.

4. Film selon la revendication 1 ou 2, **caractérisé en ce que** le stabilisant UV est choisi parmi les 2-hydroxybenzotriazoles et les triazines.

5. Film selon la revendication 4, **caractérisé en ce que** l'on choisit à titre de stabilisant UV au moins un composé choisi parmi les 2-(4,6-diphényl-1,3,5-triazine-2-yl)-5(hexyl)oxy-phénol et 2,2'-méthylène-bis(6-(2H-benzotriazole-2-yl)-4-(1,1,2,2-tetraméthylpropyl)-phénol.

6. Film selon l'une des revendications 1 à 5, **caractérisé en ce que** le polymère thermoplastique cristallisable présente une cristallinité comprise entre 5 et 65 %.

7. Film selon l'une des revendications 1 à 6, **caractérisé en ce que** le polymère thermoplastique cristallisable est choisi parmi le polyethylèneterephtalate, le polybutylènetérphtalate et un polyéthylènenaphtalate.

8. Film selon la revendication 7, **caractérisé en ce que** l'on utilise du polyéthylènetérephtalate à titre de polymère thermoplastique cristallisable.

9. Film selon la revendication 7 ou 8, **caractérisé en ce que** le film contient de la matière recyclée.

10. Film selon l'une des revendications 1 à 9, **caractérisé en ce que** le pigment blanc est choisi parmi l'un ou plusieurs des pigments blancs dioxyde de titane, sulfate de baryum, carbonate de calcium, kaolin et dioxyde de silicium.

11. Film selon la revendication 10, **caractérisé en ce que** le pigment blanc est le dioxyde de titane.

12. Film selon l'une des revendications 1 à 11, **caractérisé en ce que** le pigment blanc est enrobé.

**13.** Film selon des revendications 1 à 12, **caractérisé en ce que** le pigment blanc est présent en une quantité de 0,3 % en poids à 25 % en poids par rapport à la couche de base dans laquelle le pigment blanc est contenu.

**14.** Film selon l'une des revendications 1 à 13, **caractérisé en ce que** le pigment blanc possède une taille granulométrique moyenne de 0,10 à 0,30 μm.

**15.** Film selon l'une des revendications 1 à 14, **caractérisé en ce que** la brillance superficielle, mesurée selon la norme DIN 67530 (Angle de mesure 20°) est supérieure à 15.

**16.** Film selon l'une des revendication 1 à 14, **caractérisé en ce que** la transmission de la lumière mesurée selon la norme ASTM D 1003 est inférieure à 80 %.

**17.** Film selon l'une des revendications 1 à 14, **caractérisé en ce que** le module E mesuré selon la norme ISO 527-1-2, en direction longitudinale est supérieure à 3360 N/$mm^2$ et en direction transversale supérieure à 4800 N/$mm^2$.

**18.** Film selon l'une des revendications 1 à 17, **caractérisé en ce qu'**il présente une structure monocouche.

**19.** Film selon l'une des revendications 1 à 17, **caractérisé en ce que** le film présente une structure multicouches avec au moins une couche de recouvrement et au moins une couche de coeur.

**20.** Film selon la revendication 19, dans lequel la structure multicouche comporte deux couches de recouvrement et une couche de coeur situé entre les couches de recouvrement.

**21.** Film selon la revendication 19 ou 20, **caractérisé en ce que** la couche de base comprend au moins un pigment blanc.

**22.** Film selon la revendication 19 ou 20, **caractérisé en ce que** la ou les couches de recouvrement comprennent au moins un stabilisant UV.

**23.** Procédé pour la fabrication d'un film blanc selon l'une des revendications 1 à 22, **caractérisé en ce que** l'on fait fondre un polymère en plastique cristallisable dans au moins une extrudeuse et au moins un polymère en fusion obtenu est amené selon la composition de la couche du film à une buse ou les polymères en fusion obtenus sont amenés selon les compositions des couches de base et de recouvrement à une buse multicouche, puis extrudée (s) à travers la buse sur un rouleau de refroidissement et que le pré-film ainsi obtenu est ensuite étiré de manière bi-axiale et fixé par l'effet de chaleur, le ou les polymères en fusion pour la couche de base et/ou pour la ou les couches de recouvrement contenant au moins un pigment blanc et la fusion pour le ou les couches de recouvrement contenant au moins un stabilisant UV.

**24.** Procédé selon la revendication 23, **caractérisé en ce que** l'addition du pigment blanc et/ou du stabilisant UV est réalisée par le biais de la technologie Masterbatch.

**25.** Utilisation d'un film selon l'une des revendications 1 à 22, comme revêtement d'intérieur, afficheur, panneaux, verre de protection, dans les luminaires, dans la construction de magasins et d'étagères, article de promotion, matériau de couverture, pour des serres, toitures, revêtements extérieurs, couvertures, dans le secteur de construction, à titre de profil de publicité lumineuse, de mâts d'ombrage ou dans des applications électriques.